# EUROPÄISCHE PATENTSCHRIFT

(11) **EP 0 597 147 B1**
(45) Veröffentlichungstag und Bekanntmachung des Hinweises auf die Patenterteilung: **09.08.1995**
(21) Anmeldenummer: 92119421.3
(22) Anmeldetag: 13.11.1992
(51) Int. Cl.: H02G 5/06

(54) **Gekapselte gasisolierte Hochspannungsanlage und Baugruppe einer solchen Anlage**
Metal clad high voltage installation and an assembly for such an installation
Installation blindée à haute tension et assemblage pour une telle installation

(43) Veröffentlichungstag der Anmeldung: 18.05.1994
(73) Patentinhaber: GEC Alsthom T&D AG, 5036 Oberentfelden (CH)
(72) Erfinder: Müller, Thomas, CH-5033 Buchs (CH)
(74) Vertreter: Patentanwälte Schaad, Balass, Menzl & Partner AG

(56) Entgegenhaltungen:
- DE-A- 2 157 101
- DE-A- 3 546 011
- US-A- 4 024 339
- RESEARCH DISCLOSURE Nr. 245, September 1984, HAMPSHIRE, GB Seite 456'Insulating screw joint'

## Beschreibung

Die vorliegende Erfindung betrifft eine gasisolierte Hochspannungsanlage gemäss dem Oberbegriff des Anspruchs 1 und eine Baugruppe einer derartigen gasisolierten Hochspannungsanlage gemäss dem Oberbegriff des Anspruchs 7.

Eine Hochspannungsanlage und Baugruppe dieser Art ist aus der US-A-4,024,339 bekannt. Ein erster rohrartiger Kapselungsteil weist einen als Aussenflansch ausgebildeten Endflansch mit auf einem zur Achse des ersten Kapselungsteils koaxialen Teilkreis angeordneten Durchgangslöchern auf. Ein zweiter Kapselungsteil mit einem gleich ausgebildeten Endflansch ist fluchtend zum ersten Kapselungsteil angeordnet, wobei vom zweiten Kapselungsteil her Durchsteckschrauben die Durchgangslöcher in den Endflanschen frei durchgreifen und die Durchsteckschrauben über Muttern am Endflansch des ersten Kapselungsteils abgestützt sind. In radialer Richtung gesehen, innerhalb der Durchsteckschrauben, ist zwischen den Endflanschen des ersten und zweiten Kapselungsteils ein Befestigungsring angeordnet, der mittels Kopfschrauben am Endflansch des ersten Kapselungsteils befestigt ist. Die innere Mantelfläche dieses Befestigungsrings ist, vom ersten Kapselungsteil her gesehen, sich konisch verjüngend ausgebildet, um einen Isolator zu halten und an ein ringartiges Dichtelement zwischen sich und dem Endflansch des ersten Kapselungsteils zu drücken. Der Isolator trägt mittig einen rohrartigen Stromleiter und schottet die vom ersten und zweiten Kapselungsteil begrenzten Kapselungsräume gegeneinander ab.

Der Befestigungsring hält bei vom ersten Kapselungsteil entfernten zweiten Kapselungsteil den Isolator dichtend am ersten Kapselungsteil fest, um mit diesem eine versandbereite und zur Vorortsmontage geeignete Baugruppe zu bilden, wobei das Isoliergas im Kapselungsraum dieser Baugruppe für den Transport und die Montage üblicherweise nur geringfügig höher ist als der Umgebungsdruck. Nach montierter Hochspannungsanlage wird dann das Isoliergas unter den für die betreffende Spannung notwendigen Druck gesetzt.

Bei dieser bekannten Hochspannungsanlage sind die den ersten und zweiten Kapselungsteil miteinander verbindenden Schrauben bezüglich dem Befestigungsring nach aussen versetzt, was entsprechend grosse Abmessungen der Endflansche, sowie eine grosse Anzahl Schrauben grosser Festigkeit mit sich zieht. Infolge der grossen notwendigen Durchmesser der Endflansche ist auch der Platzbedarf der Hochspannungsanlage erheblich.

Auch bei einer Hochspannungsanlage, wie sie aus dem Katalog 47 B1, Sprecher + Schuh: "Metallgekapselte, SF6-isolierte Hochspannungsanlagen, Typ B 212" (1977) bekannt ist, sind die Befestigungsringe mittels Durchsteckschrauben auf die entsprechenden Endflansche geschraubt. Der Teilkreis dieser Durchsteckschrauben ist hier gleich wie der Teilkreis jener Durchgangslöcher in den Endflanschen und in den Befestigungsringen, welche von den die Kapselungsteile gegeneinander spannenden Durchsteckschrauben durchgriffen sind. Die Durchsteckschrauben, welche die Befestigungsringe an den entsprechenden Endflanschen halten, werden nur benötigt, bis zwei Kapselungsteile endgültig miteinander verschraubt werden. Dies insbesondere, um während des Transports als Baugruppe bis zur endgültigen Montage der Hochspannungsanlage die Gasdichtheit der Baugruppe sicherzustellen und die vom Isolator getragenen Aktivteile zu halten. Bei dieser Hochspannungsanlage benötigen die die Befestigungsringe an die Endflansche befestigenden Durchsteckschrauben erheblichen Platz neben den Durchsteckschrauben, die benötigt werden, um die Kapselungsteile aneinander zu befestigen. Auch hier müssen deshalb die Endflansche erhebliche Abmessungen aufweisen.

Weiter ist aus der DE-A-21 57 101 eine Hochspannungsanlage bekannt, bei der der Isolator an einem Befestigungsring angeordnet ist. Dieser weist beidseitig Sacklöcher mit Gewinden auf, in welche die Endflansche der entsprechenden Kapselungsteile durchgreifende Kopfschrauben eingesetzt sind. Die Kapselungsteile sind somit ausschliesslich mit dem Befestigungsring verschraubt. Dies wiederum bedingt Befestigungsringe erheblicher axialer Dicke.

Ausgehend von diesem Stand der Technik ist es eine Aufgabe der vorliegenden Erfindung, eine gattungsgemässe gasisolierte Hochspannungsanlage und eine gattungsgemässe Baugruppe einer gasisolierten Hochspannungsanlage derart weiterzubilden, dass der Platzbedarf ihrer Endflansche und somit die Abmessungen der gesamten Anlage bzw. Baugruppe verkleinert ist.

Diese Aufgabe wird mit einer gasisolierten Hochspannungsanlage, die die Merkmale des Anspruchs 1 und einer Baugruppe, die die Merkmale des Anspruchs 7 aufweist, gelöst.

Für die Befestigung des Befestigungsrings am Endflansch des ersten Kapselungsteils und zum Aneinanderbefestigen des ersten und zweiten Kapselungsteils, werden dieselben Schrauben verwendet. Es ist somit ein Minimum an Schrauben notwendig und folglich kann auch die Abmessung der Endflansche minimal sein. Es sind keine Schrauben notwendig, die ausschliesslich den Befestigungsring am Endflansch des ersten Kapselungsteils halten.

Da wegen der gewünschten freien Kombinierbarkeit aller Kapselungsteile alle Endflansche einer Hochspannungsanlage üblicherweise gleich ausgeführt werden, ergibt sich mit der vorliegenden Erfindung eine Reduktion der Abmessungen sämtlicher Endflansche. Dies bewirkt wiederum, dass die Abmessungen der gesamten Hochspannungsanlage an und für sich reduziert werden können. Der Einfluss auf die Kosten ist daner enorm. Der dazu notwendige Einsatz von Bolzenschrauben mit einem Anschlag zwischen den beiden Gewinden erfordert vergleichsweise einen verschwindend kleinen Aufwand.

In bevorzugter Weise sind die von den Schrauben durchgriffenen Durchlässe des Befestigungsrings stufenartig ausgebildet, wie dies in den Ansprüchen 2,3,8 und 9 angegeben ist. Dadurch wird vermieden, dass am zweiten Kapselungsteil Ausnehmungen vorhanden sind, um jenen Teil der Schraube aufzunehmen, an dem der Anschlag ausgebildet ist. Weiter hat die besonders bevorzugte Ausbildungsform gemäss den Ansprüchen 3 und 9 den Vorteil, dass bei vom ersten Kapselungsteil abgetrenntem zweiten Kapselungsteil der freie Endbereich der Schraube sich im Innern des Durchlasses befindet. Eine Verletzung der Schraube und insbesondere ihres diesseitigen Gewindes während des Transports und bei der Montage ist dadurch verhindert.

Weitere bevorzugte Ausbildungsformen der vorliegenden Erfindung sind in den weiteren abhängigen Ansprüchen angegeben.

Die vorliegende Erfindung wird nun anhand von zwei in der Zeichnung dargestellten Ausführungsbeispielen näher erläutert. Es zeigen rein schematisch:
- Fig. 1: im Längsschnitt einen Teil einer Sammelschiene einer Hochspannungsanlage im Bereich der Verbindung von Kapselungsteilen während der Montage;
- Fig. 2: bezüglich Fig. 1 vergrössert den Verbindungsbereich der aneinander befestigten Kapselungsteile;
- Fig. 3: einen Teil einer Baugruppe der Hochspannungsanlage gemäss Fig. 1; und
- Fig. 4: in einem Längsschnitt einen Teil der Hochspannungsanlage im Verbindungsbereich eines der Sammelschiene zugeordneten Kapselungsteils mit einem anderen Kapselungsteil während der Montage.

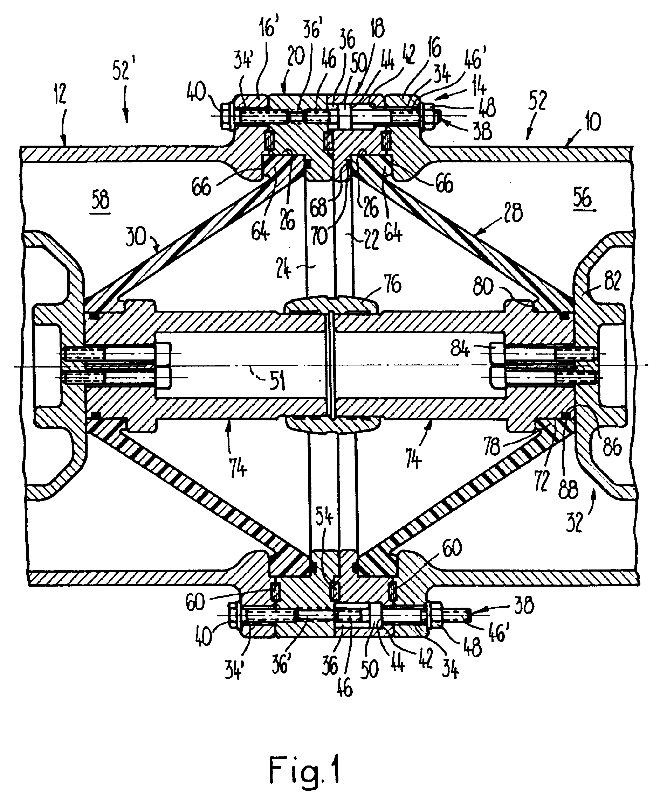

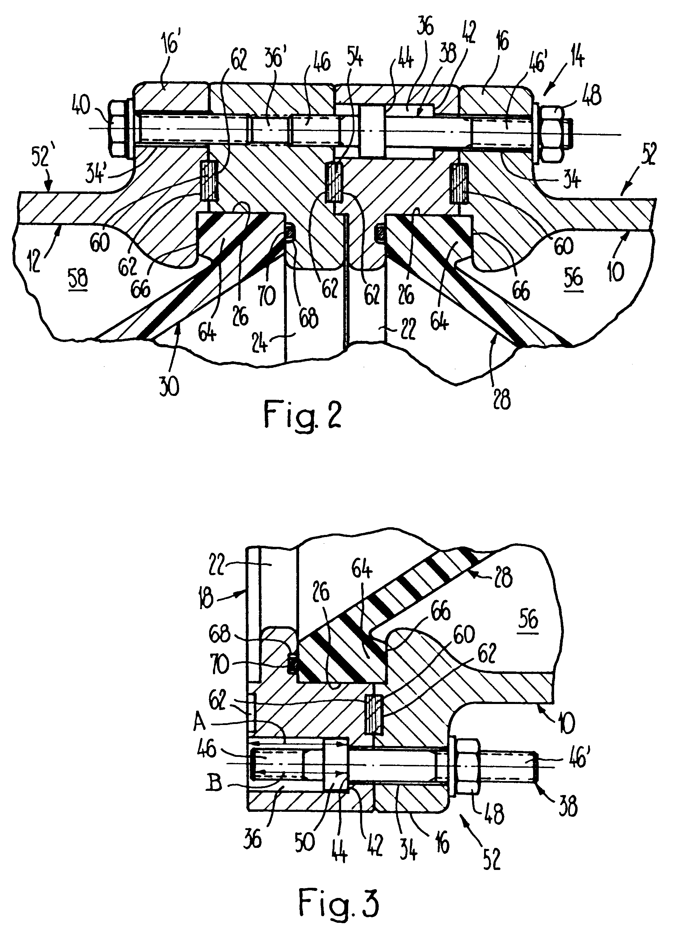

Die Fig. 1 und 2 zeigen einen ersten Kapselungsteil 10 und einen zweiten Kapselungsteil 12 im Bereich der Schraubenverbindungen 14, mittels welchen sie aneinander befestigt sind. Die beiden rohrartigen, miteinander fluchtenden Kapselungsteile 10,12 weisen an ihren einander zugewandten Enden Endflansche 16,16′ auf, die als Aussenflansche ausgebildet sind. Zwischen diesen sind ein erster Befestigungsring 18 und ein zweiter Befestigungsring 20 angeordnet, die in radialer Richtung gesehen im wesentlichen dieselben Abmessungen aufweisen wie die Endflansche 16,16′. Die beiden Befestigungsringe 18,20 weisen an ihren einander zugewandten Endbereichen umlaufende Haltewulste 22,24 auf, die in Richtung gegen innen bezüglich an den Befestigungsringen 18,20 angeformten inneren Mantelflächen 26 vorstehen, um zwischen sich und den entsprechenden Kapselungsteilen 10,12 konusartige Isolatoren 28,30 festzuklemmen. Diese stützen bezüglich der Kapselung die stromleitenden Teile 32 elektrisch isoliert ab.

Die Endflansche 16,16′ und die beiden Befestigungsringe 18,20 weisen in axialer Richtung verlaufende Durchgangslöcher 34,34′,36,36′ auf, die miteinander fluchten und auf einem einheitlichen Teilkreis angeordnet sind. Die Durchgangslöcher 34 im Endflansch 16 und die Durchgangslöcher 34′ im Endflansch 16′ sind derart ausgebildet, dass sie von Bolzenschrauben 38 bzw. Kopfschrauben 40 frei durchgriffen werden können. Die Durchgangslöcher 36 im ersten Befestigungsring 18 sind, vom ersten Kapselungsteil 10 her gesehen stufenartig erweitert ausgebildet, wobei die stufenartige Erweiterung einen Gegenanschlag 42 bildet, der zum Zusammenwirken mit einem Anschlag 44 an der betreffenden Bolzenschraube 38 bestimmt ist. Die Durchgangslöcher 36′ im zweiten Befestigungsring 20 sind als Gewindelöcher ausgebildet und zum Zusammenwirken sowohl mit dem Gewinde der Kopfschrauben 40 als auch dem diesseitigen Gewinde 46 der Bolzenschrauben 38 bestimmt.

Die Bolzenschrauben 38 weisen im vom Gewinde 46 entfernten Endbereich ein weiteres Gewinde 46′ auf, welches mit einer Mutter 48 zusammenwirkt, die sich über eine Unterlagsscheibe am Endflansch 16 des ersten Kapselungsteils 10 auf der dem ersten Befestigungsring 18 abgewandten Seite abstützt. Zwischen den beiden Gewinden 46,46′ ist die Bolzenschraube 38 mit einem umlaufenden Wulst 50 versehen, dessen dem ersten Kapselungsteil 10 zugewandte Stirnseite den Anschlag 44 bildet. Der Vollständigkeit halber sei erwähnt, dass der Gegenanschlag 42 und Anschlag 44 in rechtwinklig zur Längsachse 51 der Kapselungsteile 10,12 verlaufenden Ebenen liegen.

Wie dies Fig. 1 oben und Fig. 2 zeigen, ist der zweite Befestigungsring 20 mittels der Bolzenschrauben 38 gegen den Endflansch 16 gespannt, wobei der erste Befestigungsring 18 zwischen diesem und dem zweiten Befestigungsring 20 festgeklemmt gehalten ist. Dabei sind die Bolzenschrauben 38 mit ihrem Gewinde 46 in die Durchgangslöcher 36′ eingeschraubt und über die Muttern 48 am Endflansch 16 abgestützt. Der Anschlag 44 ist vom Gegenanschlag 42 abgehoben. Der zweite Kapselungsteil 12 ist mittels in die Durchgangslöcher 36′ eingewindeten Kopfschrauben 40 am zweiten Befestigungsring 20 befestigt.

Ist der erste Kapselungsteil 10 zusammen mit dem ersten Befestigungsring 18 als Baugruppe 52 (siehe Fig. 3) vom zweiten Kapselungsteil 12 und dem zweiten Befestigungsring 20 getrennt, ist der erste Befestigungsring 18 mittels der Bolzenschrauben 38 am Endflansch 16 des ersten Kapselungsteils 10 befestigt. Dabei liegen die Bolzenschrauben 38 mit ihren Anschlägen 44 an den Gegenanschlägen 42 des ersten Befestigungsrings 18 an und sind über die Muttern 48 am Endflansch 16 abgestützt. Die Teiltiefe A der Durchgangslöcher 36 gemessen vom dem ersten Kapselungsteil 12 abgewandten Ende bis zum Gegenanschlag 42 ist dabei mindestens gleich gross wie die Teillänge B der Bolzenschraube 38, gemessen von ihrem dem ersten Kapselungsteil 10 abgewandten Ende bis zum Anschlag 44 (Fig. 3). Dadurch sind die Bolzenschrauben 38 diesseitig vollständig in die Durchlässe 36 eingetaucht, so dass insbesondere die Gewinde 46 beim Transport der Baugruppe 52, sowie bei der Montage der Hochspannungsanlage, gegen Verletzung geschützt sind. Selbstverständlich ist die axiale Abmessung der Gewinde 46′ genügend gross, um ihre Aufgabe bei der Baugruppe 52 als auch bei der montierten Hochspannungsanlage erfüllen zu können.

Bei der Montage der Hochspannungsanlage wird die Baugruppe 52 mit dem zusammen mit dem zweiten Kapselungsteil 12 eine weitere Baugruppe 52′ bildenden zweiten Befestigungsring 20 ausgerichtet und stirnseitig unter Einlegen eines Dichtungsrings 54 zur Anlage gebracht (siehe Fig. 1 unten). Dann wird die Mutter 48 einer ersten Bolzenschraube 38 gelöst und diese Bolzenschraube 38 mit ihrem Gewinde 46 in das entsprechende Durchgangsloch 36′ des zweiten Befestigungsrings 20 eingewindet. Dabei hebt der Anschlag 44 vom Gegenanschlag 42 ab. Die übrigen Bolzenschrauben 48 halten aber den ersten Befestigungsring 18 weiter am Endflansch 16 fest. Danach wird die vorgängig gelöste Mutter 48 wieder angezogen. Dieser Vorgang wird nun wiederholt, bis sämtliche Bolzenschrauben 38 den zweiten Befestigungsring 20 und den Endflansch 16 gegeneinander spannen. Bei einer eventuellen Demontage wird in entgegengesetzter Reihenfolge eine Bolzenschraube 38 nach der anderen nach dem Lösen der entsprechenden Mutter 38 aus dem Durchgangsloch 36′ ausgewindet und dann mit ihrem Anschlag 44 durch Anziehen der Mutter 48 am betreffenden Gegenanschlag 42 zur Anlage gebracht. Der vom ersten Kapselungsteil 10 und ersten Isolator 28 begrenzte erste Kapselungsraum 56 bleibt dabei immer dicht verschlossen. Desgleichen der vom zweiten Kapselungsteil 12 und zweiten Isolator 30 begrenzte zweite Kapselungsraum 58.

Um die Kapselungsräume 56,58 gegen aussen abzudichten, sind dem Dichtungsring 54 entsprechende Dichtungsringe 60 zwischen die Endflansche 16,16′ und den ersten bzw. zweiten Befestigungsring 18,20 eingelegt. Da die Dichtungsringe 54,60 in Nuten 62 in den Befestigungsringen 18,20 und Endflanschen 16,16′ eingelegt sind und die Befestigungsringe 18,20 aneinander und an den Endflanschen 16,16′ stirnseitig anliegen, stehen die Dichtungsringe 54,60 unter optimaler Pressung und gewährleisten somit eine zuverlässige Dichtheit.

An den Isolatoren 28,30 sind umlaufende Halteringe 64 angeformt, welche zur radialen Fixierung an den Mantelflächen 26 anliegen und mit ihren Stirnflächen einerseits mit einer Anlagefläche 66 am ersten bzw. zweiten Kapselungsteil 10,12 und andererseits mit den Haltewülsten 22,24 der Befestigungsringe 18,20 zusammenwirken. Die Haltewülste 22,24 weisen auf der dem betreffenden Isolator 28,30 zugewandten Stirnseite je eine Nut 68 auf, in die ein weiterer Dichtungsring 70 eingelegt ist, um die Kapselungsräume 56,58 auch in axialer Richtung abzudichten.

Die konusartigen Isolatoren 28,30 weisen mittig einen zylinderförmigen Durchlass 72 auf, der je von einem zur Achse 51 koaxialen Verbindungsleiter 74 durchgriffen ist. Diese Verbindungsleiter 74 sind bei montierter Hochspannungsanlage miteinander elektrisch mittels einer Muffe 76 verbunden. Bei ihrem Durchlass 72 weisen die Isolatoren 28,30 innere Halteringe 78 auf, an welchen einerseits stirnseitig die betreffenden Verbindungsleiter 74 mit einer umlaufenden Anlagefläche 80 und andererseits Kupplungskörper 82 anliegen. Die Verbindungsleiter 74 sind mit den betreffenden Kupplungskörpern 82 mittels in axialer Richtung verlaufenden Schrauben 84 aneinander befestigt und somit über die Isolatoren 28,30 und die Befestigungsringe 18,20 am ersten bzw. zweiten Kapselungsteil 10,12 fixiert. Die Verbindungsleiter 74 weisen im Bereich der Durchlässe 72 je eine Umfangsnut 86 auf, in die ein ringartiges Dichtorgan 88 eingelegt ist, um den Durchtritt von Isoliergas zwischen den Isolatoren 28,30 und den Verbindungsleitern 74 zu unterbinden.

Die konusartigen Isolatoren 28,30 sind voneinander weggerichtet, d.h. dass sie sich in Richtung gegen das Innere der entsprechenden Kapselungsräume 56,58 verjüngen. Die freien Enden der Verbindungsleiter 74 liegen etwa in der Ebene des axialen, vom entsprechenden Kapselungsteil 10,12 entfernten Endes der Befestigungsringe 18,20. Sie sind somit beim Versand und bei der Montage der Baugruppen 52,52′ gegen mechanische Schäden geschützt. Bei der Montage ist die Verbindung der Verbindungsleiter 74 einfach herzustellen, kann doch auf den einen Verbindungsleiter 74 die Muffe 76 aufgesetzt werden und dann die Muffe 76 mit dem anderen Verbindungsleiter 74 in axialer Richtung gefügt werden. Nach der Montage braucht einzig der Raum zwischen den beiden Isolatoren 28,30 evakuiert und dann mit Isoliergas auf den notwendigen Druck aufgefüllt zu werden, während die anderen bereits im Werk mit Isoliergas auf einen bestimmten Druck gefüllten Kapselungsräume 56,58 nur noch mit weiterem Isoliergas aufgefüllt zu werden brauchen, bis der notwendige Nenndruck erreicht ist. Selbstverständlich ist es auch denkbar, dass einer der Isolatoren 28,30 nicht als Schottisolator ausgebildet ist und einen Durchlass zwischen dem entsprechenden Kapselungsraum 56,58 und dem Raum zwischen den beiden Isolatoren 28,30 aufweist. In diesem Fall ist es nicht notwendig, für diesen letztgenannten Gasraum einen separaten Gasanschluss vorzusehen. Es ist dann aber notwendig, mach der Montage der Hochspannungsanlage den entsprechenden Kapselungsraum 56,58 zu evakuieren und mit Isoliergas aufzufüllen.

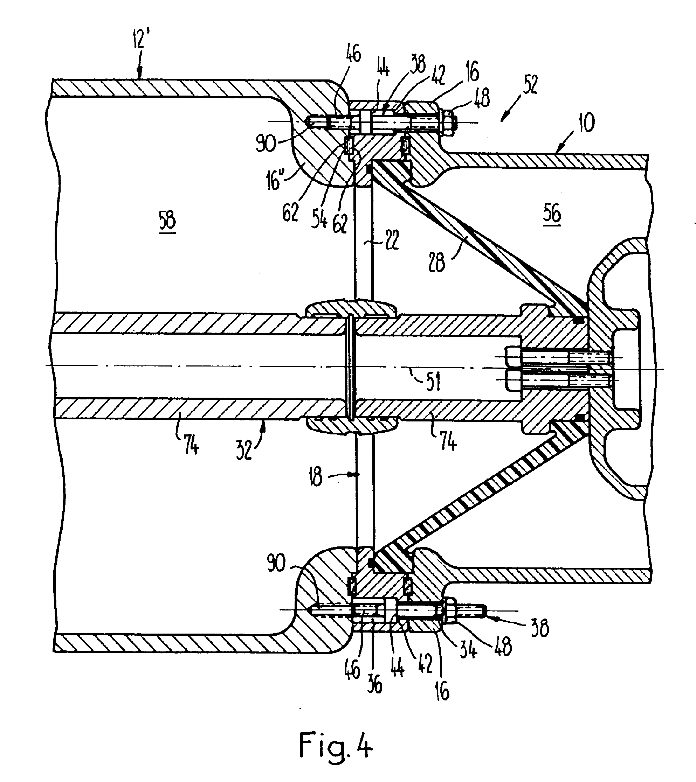

Bei dem in der Fig. 4 gezeigten Teil der Hochspannungsanlage ist die Baugruppe 52 genau gleich ausgebildet wie die in den Fig. 1 bis 3 gezeigte Baugruppe 52. Es wird auf die entsprechende Beschreibung weiter oben verwiesen und in der Fig. 4 sind die betreffenden Bezugszeichen nur noch insoweit eingetragen, als dies für das Verständnis notwendig ist. Der bezüglich dem ersten Kapselungsteil 10 im Durchmesser grössere zweite Kapselungsteil 12′ weist einen Endflansch 16˝ auf, der als Innenflansch ausgebildet ist. Dieser weist mit den Durchgangslöchern 34 im Endflansch 16 des ersten Kapselungsteils 10 und Durchgangslöchern 36 im ersten Befestigungsring 18 fluchtende, sacklochartige Gewindelöcher 90 auf. Im übrigen entspricht die Ausbildung des Endflansches 16˝ an seiner der Baugruppe 52 zugewandten Seite dem entsprechenden Bereich des zweiten Befestigungsrings 20 gemäss den Fig. 1 und 2.

Wie dies Fig. 4 unten zeigt, ist bei der versandtbereiten Baugruppe 52 der erste Befestigungsring 18 mittels der Bolzenschrauben 38 am Endflansch 16 gehalten. Die die Durchgangslöcher 34,36 durchgreifenden Bolzenschrauben 38 liegen mit ihren Anschlägen 44 an den Gegenanschlägen 42 des ersten Befestigungsrings 18 an und sind über die Muttern 48 andererseits am Endflansch 16 abgestützt. Der befestigungsringseitige Teil der Bolzenschrauben 38 ist dabei vollständig in den Durchgangslöchern 36 versenkt.

Im Innern des zweiten Kapselungsteils 12′ ist ebenfalls ein Verbindungsleiter 74 mittig angeordnet, der über in der Fig. 4 nicht gezeigte, allgemein bekannte Isolationsmittel am zweiten Kapselungsteil 12′ abgestützt ist. Bei der Montage wird wiederum eine Muffe 76 auf den Endbereich des einen Verbindungsleiters 74 aufgesteckt und diese in axialer Richtung mit dem anderen Verbindungsleiter 74 gefügt. Zum Aneinanderbefestigen der Kapselungsteile 10,12′ wird dann wiederum bolzenschraubenweise die Mutter 48 gelöst, die Bolzenschraube 38 mit ihrem Gewinde 46 in das betreffende Gewindeloch 90 eingedreht und dann die Mutter 48 wieder angezogen, wie dies in der Fig. 4 oben gezeigt ist. Dabei entfernt sich wiederum der Anschlag 44 vom Gegenanschlag 42. Selbstverständlich wird wiederum ein Dichtungsring 54 in die entsprechenden Nuten 62 im Endflansch 16˝ und ersten Befestigungsring 18 eingelegt, um das spätere Austreten von Isoliergas zu verhindern. Ist der Isolator 28 der Baugruppe 52 wiederum als Schottisolator ausgebildet, kann der Kapselungsraum 56 im Werk bereits mit Isoliergas gefüllt werden. Da im gezeigten Beispiel im Bereich des Endflansches 16˝ kein dem zweiten Kapselungsteil 12′ zugeordneter Isolator vorgesehen ist, ist nach der Montage der Hochspannungsanlage der entsprechende Kapselungsraum 58 zu evakuieren und mit Isoliergas zu füllen.

Bei der Ausbildungsform gemäss Fig. 4 werden nur Bolzenschrauben 38 benötigt, um sowohl den ersten Befestigungsring 18 am ersten Kapselungsteil 10 zu befestigen, als auch die Kapselungsteile 10 und 12′ aneinander zu befestigen.

Selbstverständlich findet die vorliegende Erfindung auch bei mehrphasig gekapselten Hochspannungsanlagen Einsatz.

## Patentansprüche

1. Gasisolierte Hochspannungsanlage mit einem einen als Aussenflansch ausgebildeten Endflansch (16) mit Durchgangslöchern (34) aufweisenden ersten Kapselungsteil (10), einem zweiten Kapselungsteil (12,12′), einem zwischen diesem und dem Endflansch (16) angeordneten, einen Isolator (28) haltenden Befestigungsring (18), und Schraubenverbindungen (14) zum Befestigen des Befestigungsrings (18) am Endflansch (16) und Aneinanderbefestigen des ersten und zweiten Kapselungsteils (10,12,12′), wobei mit dem zweiten Kapselungsteil (12,12′) verbundene Schrauben (38) den Befestigungsring (18) und die Durchgangslöcher (34) des Endflansches (16) frei durchgreifen und über Muttern (48) an diesem abgestützt sind, dadurch gekennzeichnet, dass die Schrauben (38) Bolzenschrauben mit einem zwischen ihren zwei Gewinden (46,46′) angeordneten Anschlag (44) sind und dass am Befestigungsring (18) auf der dem Endflansch (16) abgewandten Seite ein zum Zusammenwirken mit dem jeweiligen Anschlag (44) bestimmter Gegenanschlag (42) vorhanden ist, um bei vom ersten Kapselungsteil (10) abgetrenntem zweiten Kapselungsteil (12,12′) den Befestigungsring (18) am Endflansch (16) zu befestigen.

2. Hochspannungsanlage nach Anspruch 1, dadurch gekennzeichnet, dass die von den Schrauben (38) durchgriffenen Durchlässe (36) des Befestigungsrings, vom Endflansch (16) her gesehen, stufenartig erweitert ausgebildet sind und die jeweilige Stufe den Gegenanschlag (42) bildet.

3. Hochspannungsanlage nach Anspruch 2, dadurch gekennzeichnet, dass die Teiltiefe des Durchlasses (36), gemessen von seinem dem Endflansch (16) abgewandten Ende bis zum Gegenanschlag (42), mindestens der Teillänge der Schraube (38) von ihrem Anschlag (44) bis zu ihren vom Endflansch (16) entfernten Ende entspricht.

4. Hochspannungsanlage nach einem der Ansprüche 1 bis 3, dadurch gekennzeichnet, dass der zweite Kapselungsteil (12′) einen als Innenflansch ausgebildeten Endflansch (16˝) mit sacklochartigen Gewindelöchern (90) aufweist in die die Schrauben (38) eingewindet sind.

5. Hochspannungsanlage nach einem der Ansprüche 1 bis 3, dadurch gekennzeichnet, dass am zweiten Kapselungsteil (12) ein zum Halten eines zweiten Isolators (30) bestimmter zweiter Befestigungsring (20) angeordnet ist, der mit Gewindelöchern (36′) versehen ist, in welche die Schrauben (38) eingewindet sind.

6. Hochspannungsanlage nach einem der Ansprüche 1 bis 5, dadurch gekennzeichnet, dass die Schrauben (38) zwischen ihren Gewinden (46,46′) einen umlaufenden Wulst (50) aufweisen, dessen eine axiale Stirnseite den Anschlag (44) bildet.

7. Baugruppe (52) einer gasisolierten Hochspannungsanlage gemäss einem der Ansprüche 1 bis 6, mit einem ersten Kapselungsteil (10), der einen als Aussenflansch ausgebildeten Endflansch (16) mit Durchgangslöchern (34) aufweist, und einem mittels Schrauben (38) am Endflansch (16) befestigten, einen Isolator (28) haltenden Befestigungsring (18), wobei die Schrauben (38) den Befestigungsring (18) und den Endflansch (16) frei durchgreifen und sich an am Befestigungsring (16) vorgesehenen Gegenanschlägen (42) auf der dem Endflansch (16) abgewandten Seite und über Muttern (48) am Endflansch (16) abstützen, dadurch gekennzeichnet, dass die Schrauben (38) als Bolzenschrauben mit einem zwischen ihren zwei Gewinden (46,46′) angeordneten Anschlag (44) ausgebildet und zum Aneinanderbefestigen des ersten Kapselungteils (10) und eines zweiten Kapselungsteils (12,12′) bestimmt sind, und sich mit ihren Anschlägen (44) an den Gegenanschlägen (42) abstützen.

8. Baugruppe nach Anspruch 7, dadurch gekennzeichnet, dass die von den Schrauben (38) durchgriffenen Durchlässe (36) des Befestigungsrings (18), vom Endflansch (16) her gesehen, stufenartig erweitert ausgebildet sind und die jeweilige Stufe den Gegenanschlag (42) bildet.

9. Baugruppe nach Anspruch 8, dadurch gekennzeichnet, dass die Teiltiefe des Durchlasses (36), gemessen von seinem dem Endflansch (16) abgewandten Ende bis zum Gegenanschlag (42), mindestens der Teillänge der Schraube (38) von ihrem Anschlag (44) bis zu ihren vom Endflansch (16) entfernten Ende entspricht.

10. Baugruppe nach einem der Ansprüche 7 bis 9, dadurch gekennzeichnet, dass die Schrauben (38) zwischen ihren Gewinden (46,46′) einen umlaufenden Wulst (50) aufweisen, dessen eine axiale Stirnseite den Anschlag (44) bildet.

## Revendications

1. Installation à haute tension sous isolation gazeuse, avec un premier élément de blindage (10), présentant une bride extrême (16) réalisée sous forme de bride externe et munie de trous de passage (34), avec un second élément de blindage (12, 12′), avec une bague de fixation (18), disposée entre ce dernier et la bride extrème (16) et maintenant un isolateur (28), et avec des boulonnages (14) pour fixer la bague de fixation (18) sur la bride extrême (16), et pour la fixation mutuelle du premier et du second élément de blindage (10, 12, 12′), des vis (38), assemblées avec le second élément de blindage (12, 12′), traversant librement la bague de fixation (18) et les trous de passage (34) de la bride extreme (16), sur laquelle elles s'appuient par l'intermédiaire d'écrous (48), caractérisée en ce que les vis (38) sont des boulons avec une butée (44) disposée entre leurs deux filetages (46, 46′), et en ce qu'une contre-butée (42), destinée a concourir avec la butée respective (44), est prévue sur la bague de fixation (18), sur le côté opposé a la bride extrême (16), en vue de fixer la bague de fixation (18) sur la bride extreme (16), lorsque le second element de blindage (12, 12′) est séparé du premier élément de blindage (10).

2. Installation à haute tension suivant la revendication 1, caractérisée en ce que les trous de passage (36) de la bague de fixation, traverses par les vis (38), ont une réalisation élargie et étagée, vu à partir de la bride extrême (16), l'étage respectif formant la contre-butée (42).

3. Installation à haute tension suivant la revendication 2, caractérisée en ce que la profondeur partielle du trou de passage (36), mesurée de l'extrémité de ce dernier, opposée à la bride extrême (16), jusqu'a la contre-butée (42), correspond au moins à la longueur partielle de la vis (38), mesurée de sa butée (44) jusqu'à son extrémite distante de la bride extrême (16).

4. Installation à haute tension suivant l'une quelconque des revendications 1 à 3, caractérisée en ce que le second élément de blindage (12′) presente une bride extrême (16˝), réalisée sous forme de bride interne et munie de trous borgnes taraudés (90), dans lesquels sont vissées les vis (38).

5. Installation à haute tension suivant l'une quelconque des revendications 1 à 3, caractérisée en ce qu'une seconde bague de fixation (20), destinée à maintenir un second isolateur (30), est disposée sur le second élément de blindage (12), cette bague étant munie de trous taraudés (36′), dans lesquels sont vissées les vis (38).

6. Installation a haute tension suivant l'une quelconque des revendications 1 à 5, caractérisée en ce que les vis (38) présentent un bourrelet périphérique (50) entre leurs filetages (46, 46′), un côté frontal axial de ce bourrelet formant la butée (44).

7. Assemblage (52) pour une installation à haute tension sous isolation gazeuse suivant l'une quelconque des revendications 1 a 6, avec un premier élément de blindage (10), qui présente une bride extrême (16) réalisée sous forme de bride externe et munie de trous de passage (34), et avec une bague de fixation (18), fixée au moyen de vis (38) sur la bride extrême (16) et maintenant un isolateur (28), les vis (38) traversant librement la bague de fixation (18) et la bride extreme (16), et s'appuyant sur des contre-butées (42), prévues sur la bague de fixation (16), sur le côté opposé à la bride extrême (16), et sur la bride extrême (16) par l'intermédiaire d'écrous (48), caractérisé en ce que les vis (38) sont réalisées sous forme de boulons, avec une butée (44) disposee entre Leurs deux filetages (46, 46′), sont destinées à la fixation mutuelle du premier élément de blindage (10) et du second élément de blindage (12, 12′), et s'appuient par leurs butées (44) sur les contre-butées (42).

8. Assemblage suivant la revendication 7, caractérisé en ce que les trous de passage (36) de la bague de fixation (18), traversés par les vis (38), ont une réalisation élargie et étagée, vu à partir de la bride extrême (16), l'étage respectif formant la contre-butée (42).

9. Assemblage suivant la revendication 8, caractérisé en ce que la profondeur partielle du trou de passage (36), mesurée de l'extrémité de ce dernier, opposée à la bride extrême (16), jusqu'à la contre-butée (42), correspond au moins à la longueur partielle de la vis (38), mesurée de sa butée (44) jusqu'à son extrémité distante de la bride extrême (16).

10. Assemblage suivant l'une quelconque des revendications 7 à 9, caractérisé en ce que les vis (38) présentent un bourrelet périphérique (50) entre leurs filetages (46, 46′), le côté frontal axial de ce bourrelet formant la butée (44).

## Claims

1. Gas-insulated high-tension installation having a first encasing part (10) exhibiting an end flange (16), designed as an outer flange, with through bores (34), a second encasing part (12, 12′), a securing ring (18), which is disposed between the latter and the end flange (16) and which holds an insulator (28), and screw connections (14) for the securing of the securing ring (18) to the end flange (16) and the securing of the first and second encasing part (10, 12, 12′) to one another, in which bolts (38) connected to the second encasing part (12, 12′) freely penetrate the securing ring (18) and the through bores (34) of the end flange (16) and are supported on the latter by means of nuts (48), characterized in that the bolts (38) are threaded bolts with an abutment (44) disposed between its two threads (46, 46′), and in that a counterabutment (42) intended to cooperate with the respective abutment (44) is provided on the securing ring (18) on the side remote from the end flange (16), in order to secure the securing ring (18) to the end flange (16) when the second encasing part (12, 12′) has been separated from the first encasing part (10).

2. High-tension installation according to Claim 1, characterized in that the apertures (36) of the securing ring which are penetrated by the bolts (38), seen from the end flange (16), are designed with a step-like broadening and the respective step forms the counterabutment (42).

3. High-tension installation according to Claim 2, characterized in that the partial depth of the aperture (36), measured from its end remote from the end flange (16), to the counterabutment (42), corresponds at least to the partial length of the bolt (38) from its abutment (44) to its end remote from the end flange (16).

4. High-tension installation according to one of Claims 1 to 3, characterized in that the second encasing part (12′) exhibits an end flange (16˝), designed as an internal flange, with blind-bore-like threaded bores (90) into which the bolts (38) are threaded in.

5. High-tension installation according to one of Claims 1 to 3, characterized in that a second securing ring (20) intended to hold a second insulator (30) is disposed on the second encasing part (12), which second securing ring is provided with threaded bores (36′), into which the bolts (38) are threaded in.

6. High-tension installation according to one of Claims 1 to 5, characterized in that the bolts (38) exhibit, between their threads (46, 46′), a circulating beading (50), an axial end face of which forms the abutment (44).

7. Assembly (52) of a gas-insulated high-tension installation according to one of Claims 1 to 6, having a first encasing part (10), which exhibits an end flange (16), designed as an outer flange, with through bores (34), and a securing ring (18) which is secured by means of bolts (38) to the end flange (16) and which holds an insulator (28), in which the bolts (38) freely penetrate the securing ring (18) and the end flange (16) and are supported on counterabutments (42) provided on the securing ring (16) on the side remote from the end flange (16) and by means of nuts (48) on the end flange (16), characterized in that the bolts (38) are designed as threaded bolts with an abutment (44) disposed between their two threads (46, 46′) and are intended for the securing, to one another, of the first encasing part (10) and of a second encasing part (12, 12′), and are supported by their abutments (44) on the counterabutments (42).

8. Assembly according to Claim 7, characterized in that the apertures (36) of the securing ring (18) which are penetrated by the bolts (38), seen from the end flange (16), are designed with a step-like broadening and the respective step forms the counterabutment (42).

9. Assembly according to Claim 8, characterized in that the partial depth of the aperture (36), measured from its end remote from the end flange (16) to the counterabutment (42), corresponds at least to the partial length of the bolt (38) from its abutment (44) to its end remote from the end flange (16).

10. Assembly according to one of Claims 7 to 9, characterized in that the bolts (38) exhibit, between their threads (46, 46′), a circulating beading (50) an axial end face of which forms the abutment (44).
